(19) **Europäisches Patentamt / European Patent Office / Office européen des brevets**

(11) **EP 4 166 507 A1**

(12) **EUROPEAN PATENT APPLICATION**
published in accordance with Art. 153(4) EPC

(43) Date of publication:
**19.04.2023 Bulletin 2023/16**

(21) Application number: **21858663.4**

(22) Date of filing: **23.08.2021**

(51) International Patent Classification (IPC):
**C01G 53/00** (2006.01)      **C01G 53/04** (2006.01)
**H01M 4/525** (2010.01)      **H01M 4/505** (2010.01)
**H01M 4/36** (2006.01)      **H01M 4/62** (2006.01)
**H01M 10/052** (2010.01)

(52) Cooperative Patent Classification (CPC):
**C01G 53/00; C01G 53/04; H01M 4/36;**
**H01M 4/505; H01M 4/525; H01M 4/62;**
**H01M 10/052;** Y02E 60/10

(86) International application number:
**PCT/KR2021/011173**

(87) International publication number:
**WO 2022/039576 (24.02.2022 Gazette 2022/08)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.08.2020   KR 20200105291**

(71) Applicant: **Lg Chem, Ltd.**
**Seoul 07336 (KR)**

(72) Inventors:
• **JUNG, Won Sig**
**Daejeon 34122 (KR)**

• **YOON, Yeo June**
**Daejeon 34122 (KR)**
• **LEE, Kang Hyeon**
**Daejeon 34122 (KR)**
• **RHEE, Tae Young**
**Daejeon 34122 (KR)**
• **JUNG, Yong Jo**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL PREPARATION METHOD**

(57)    As a method of preparing a positive electrode active material which may reduce cake strength of the positive electrode active material and a change in the strength over time, the present invention relates to a method of preparing a positive electrode active material which includes a first step of preparing a cake including a lithium transition metal oxide having a lithium borate compound formed on a surface thereof by mixing a positive electrode active material precursor having a specific composition, a lithium-containing raw material, and a boron-containing raw material and sintering the mixture, and a second step of preparing a lithium transition metal oxide having the lithium borate compound removed therefrom by grinding the cake and washing the ground cake.

**Description**

<u>**TECHNICAL FIELD**</u>

<u>**Cross-reference to Related Applications**</u>

This application claims priority from Korean Patent Application No. 10-2020-0105291, filed on August 21, 2020, the disclosure of which is incorporated by reference herein.

<u>**Technical Field**</u>

The present invention relates to a method of preparing a positive electrode active material.

<u>**BACKGROUND ART**</u>

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt composite metal oxide of $LiCoO_2$ having a high operating voltage and excellent capacity characteristics has been mainly used. However, since the $LiCoO_2$ has very poor thermal properties due to an unstable crystal structure caused by lithium deintercalation and is expensive, there is a limitation in using a large amount of the $LiCoO_2$ as a power source for applications such as electric vehicles.

Lithium manganese composite metal oxides ($LiMnO_2$ or $LiMn_2O_4$), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery.

Accordingly, as a method to improve low thermal stability while maintaining the excellent reversible capacity of the $LiNiO_2$, a nickel cobalt manganese-based lithium composite transition metal oxide, in which a portion of nickel (Ni) is substituted with manganese (Mn) and cobalt (Co), or a nickel cobalt aluminum-based lithium composite transition metal oxide, in which a portion of Ni is substituted with Mn and Aluminum (Al), has been developed.

On a surface of the lithium composite transition metal oxide, lithium by-products, such as LiOH and $Li_2CO_3$, which are not reacted during a preparation process, and $Li_2O$ prepared at high temperatures during sintering, are present. These lithium by-products increase strength of a cake including the lithium composite transition metal oxide. Specifically, as the temperature is decreased, the $Li_2O$ prepared at high temperatures is exposed to air to be changed to $Li_2CO_3$ or LiOH, wherein, since the LiOH and $Li_2CO_3$ act as an adhesive between lithium composite transition metal oxide particles, strength between the lithium composite transition metal oxide particles increases. Accordingly, the strength of the cake including the lithium composite transition metal oxide may increase, and problems may occur in post processing such as grinding and sieving. Also, since the lithium composite transition metal oxide may be broken as grinding conditions become stronger, cell performance may also be degraded.

Accordingly, there is a need for a method of preparing a positive electrode active material which may reduce the strength of the cake including the lithium composite transition metal oxide by minimizing residual lithium that may remain on the surface of the lithium composite transition metal oxide, for example, by changing a chemical composition of the residual lithium.

<u>**DISCLOSURE OF THE INVENTION**</u>

<u>**TECHNICAL PROBLEM**</u>

An aspect of the present invention provides a method of preparing a positive electrode active material which may reduce strength of a cake and a change in the strength over time by preparing the cake including a lithium transition metal oxide having a lithium borate compound formed on a surface thereof through additionally mixing a boron-containing raw material capable of reacting with residual lithium together with a positive electrode active material precursor and a lithium-containing raw material and then sintering the mixture during preparation of the lithium transition metal oxide.

## TECHNICAL SOLUTION

According to an aspect of the present invention, there is provided a method of preparing a positive electrode active material which includes: a first step of preparing a cake including a lithium transition metal oxide having a lithium borate compound formed on a surface thereof by mixing a positive electrode active material precursor having a composition represented by Formula 1 or Formula 2, a lithium-containing raw material, and a boron-containing raw material and sintering the mixture; and
a second step of preparing a lithium transition metal oxide having the lithium borate compound removed therefrom by grinding the cake and washing the ground cake:

[Formula 1]    $[Ni_aCo_bM^1_cM^2_d](OH)_2$

[Formula 2]    $[Ni_aCo_bM^1_cM^2_d]O \cdot OH$

In Formula 1 and Formula 2,

$M^1$ is at least one of manganese (Mn) or aluminum (Al),
$M^2$ is at least one of boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), or tungsten (W), and
$0.6 \leq a < 1$, $0 < b \leq 0.4$, $0 < c \leq 0.4$, $0 \leq d \leq 0.1$, and $a+b+c+d=1$.

## ADVANTAGEOUS EFFECTS

According to a method of preparing a positive electrode active material of the present invention, strength of a cake and a change in the strength over time may be reduced by preparing the cake including a lithium transition metal oxide having a lithium borate compound formed on a surface thereof through additionally mixing a boron-containing raw material capable of reacting with residual lithium together with a positive electrode active material precursor and a lithium-containing raw material and then sintering the mixture during preparation of the lithium transition metal oxide. Accordingly, since a grinding process of the cake may be easily performed, productivity may not only be improved, but a positive electrode active material having excellent quality may also be provided.
Also, since the lithium borate compound may be easily removed through washing, performance of a secondary battery may be improved when the positive electrode active material prepared by the method according to the present invention is used in the battery.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.
It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.
Hereinafter, the present invention will be described in more detail.

### Method of Preparing Positive Electrode Active Material

A method of preparing a positive electrode active material according to the present invention includes: a first step of preparing a cake including a lithium transition metal oxide having a lithium borate compound formed on a surface thereof by mixing a positive electrode active material precursor having a composition represented by Formula 1 or Formula 2, a lithium-containing raw material, and a boron-containing raw material and sintering the mixture; and a second step of preparing a lithium transition metal oxide having the lithium borate compound removed therefrom by grinding the cake and washing the ground cake:

[Formula 1]    $[Ni_aCo_bM^1_cM^2_d](OH)_2$

[Formula 2]     $[Ni_aCo_bM^1_cM^2_d]O \cdot OH$

In Formula 1 and Formula 2,

$M^1$ is at least one of manganese (Mn) and aluminum (Al),
$M^2$ is at least one of boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W), and
$0.6 \leq a < 1$, $0 < b \leq 0.4$, $0 < c \leq 0.4$, $0 \leq d \leq 0.1$, and $a+b+c+d=1$.

The method of preparing a positive electrode active material according to the present invention may further include a third step of drying the lithium transition metal oxide having the lithium borate compound removed therefrom; and a fourth step of forming a coating layer by mixing the dried lithium transition metal oxide with a coating element-containing raw material and performing a heat treatment.

Hereinafter, each step of the method of preparing a positive electrode active material will be described in detail.

**First Step**

The first step is a step of preparing a cake including a lithium transition metal oxide having a lithium borate compound formed on a surface thereof by mixing a positive electrode active material precursor having a composition represented by Formula 1 or Formula 2, a lithium-containing raw material, and a boron-containing raw material and sintering the mixture.

[Formula 1]     $[Ni_aCo_bM^1_cM^2_d] (OH)_2$

[Formula 2]     $[Ni_aCo_bM^1_cM^2_d]O \cdot OH$

In Formula 1 and Formula 2,

$M^1$ is at least one of Mn or Al,
$M^2$ is at least one of B, Mg, Ca, Ti, V, Cr, Fe, Zn, Ga, Y, Zr, Nb, Mo, Ta, or W, and
$0.6 \leq a < 1$, $0 < b \leq 0.4$, $0 < c \leq 0.4$, $0 \leq d \leq 0.1$, and $a+b+c+d=1$.

According to the method of preparing a positive electrode active material of the present invention, strength of a cake and a change in the strength over time may be reduced by preparing the cake including a lithium transition metal oxide having a lithium borate compound formed on a surface thereof through additionally mixing a boron-containing raw material capable of reacting with residual lithium together with a positive electrode active material precursor and a lithium-containing raw material and then sintering the mixture during preparation of the lithium transition metal oxide. Accordingly, since a grinding process of the cake may be easily performed, productivity may not only be improved, but a positive electrode active material having excellent quality may also be provided.

With respect to a conventional method of preparing a positive electrode active material, since the boron-containing raw material was not mixed in the sintering process, lithium by-products, such as $LiOH$ and $Li_2CO_3$, which were not reacted during the sintering process, and $Li_2O$ prepared at high temperatures during sintering, were present on the surface of the lithium composite transition metal oxide. With respect to a cake including the lithium transition metal oxide having the lithium by-product formed on the surface thereof, since strength of the cake was high, problems occurred in post processing such as a grinding process and a sieving process which were performed after the sintering process.

However, according to the method of preparing a positive active material of the present invention, the cake including the lithium transition metal oxide having the lithium borate compound formed on the surface thereof is prepared by reaction of the lithium by-product with the boron-containing raw material through the first step. Since the cake including the lithium transition metal oxide having the lithium borate compound formed thereon has low cake strength and a change in the cake strength over time is also small, it is advantageous in that the post processing, such as the grinding process and the sieving process, is easy.

$a$ represents an atomic fraction of nickel among metallic elements in the precursor, wherein $a$ may satisfy $0.6 \leq a < 1$, $0.6 \leq a \leq 0.98$, or $0.7 \leq a \leq 0.95$.
$b$ represents an atomic fraction of cobalt among the metallic elements in the precursor, wherein $b$ may satisfy $0 < b \leq 0.4$, $0.01 \leq b \leq 0.4$, or $0.01 \leq b \leq 0.3$.

c represents an atomic fraction of an $M^1$ element among the metallic elements in the precursor, wherein c may satisfy $0<c\leq0.4$, $0.01\leq c\leq0.4$, or $0.01\leq c\leq0.3$.

d represents an atomic fraction of an $M^2$ element among the metallic elements in the precursor, wherein d may satisfy $0\leq d\leq0.1$ or $0\leq d\leq0.05$.

The lithium-containing raw material may be lithium-containing carbonates (e.g., lithium carbonate ($Li_2CO_3$), etc.), hydrates (e.g., lithium hydroxide hydrate ($LiOH\cdot H_2O$), etc.), hydroxides (e.g., lithium hydroxide, etc.), nitrates (e.g., lithium nitrate ($LiNO_3$), etc.), and chlorides (e.g., lithium chloride (LiCl), etc.). The lithium-containing raw material may specifically be a lithium hydroxide hydrate and may more specifically be $LiOH\cdot H_2O$. In this case, reactivity between the lithium-containing raw material and the precursor having a high atomic fraction of nickel among the metallic elements in the precursor may be improved.

The positive electrode active material precursor and the lithium-containing raw material may be mixed in a molar ratio of 1:0.9 to 1:1.2, preferably 1:0.95 to 1:1.15, and more preferably 1:1 to 1:1.1 during the preparation of the positive electrode active material. In a case in which the lithium-containing raw material is mixed in a molar ratio of less than the above range, there is a concern that capacity of the positive electrode active material is reduced, and, in a case in which the lithium-containing raw material is mixed in a molar ratio of greater than the above range, unreacted lithium (Li) remains as a by-product, and capacity reduction and separation of positive electrode active material particles (causing a positive electrode active material coalescence phenomenon) may occur after sintering.

The boron-containing raw material may be at least one of lithium borate, boron oxide, boric acid, an oxoacid of boron, and an oxoacid salt of boron. The boron-containing raw material, for example, may be $B_2O_3$ or $B(OH)_3$. In this case, since a melting point of the boron-containing raw material is low, reactivity may be improved.

The boron-containing raw material may be mixed in an amount of 0.01 part by weight to 5 parts by weight, preferably 0.01 part by weight to 2 parts by weight, and more preferably 0.1 part by weight to 2 parts by weight based on 100 parts by weight of the positive electrode active material precursor. In a case in which the amount of the boron-containing raw material is within the above range, since a direct effect on a sintering process is minimized, it is advantageous in terms of improving performance of the positive electrode active material.

The sintering of the first step may be performed in a temperature range of 600°C to 1,000°C. The sintering temperature may preferably be in a range of 650°C to 950°C, for example, 700°C to 900°C. In a case in which the sintering temperature is within the above range, since it is structurally stable because there is no other phase (cubic structure such as $LiM_2O_4$, MO, etc.) other than a $LiMO_2$ phase (M is transition metal) among phases of the prepared lithium transition metal oxide, there is an advantageous effect in terms of improving capacity and lifetime of the battery and preventing an increase in resistance.

The sintering of the first step may be performed in an oxygen or air atmosphere. Specifically, the sintering of the first step may be performed in an oxygen atmosphere having an oxygen concentration of 20 vol% or more, and more specifically, the sintering of the first step may be performed in an oxygen atmosphere having an oxygen concentration of 50 vol% or more. Gas other than oxygen may be an inert gas such as nitrogen, helium, and argon. In this case, since it is structurally stable because there is no other phase (cubic structure such as $LiM_2O_4$, MO, etc.) other than the $LiMO_2$ phase (M is transition metal) among the phases of the prepared lithium transition metal oxide, there is an advantageous effect in terms of improving the capacity and lifetime of the battery and preventing the increase in resistance.

The sintering of the first step may be performed for 3 hours to 30 hours. The sintering may be preferably performed for 5 hours to 20 hours, for example, 7 hours to 15 hours. In a case in which the sintering time is within the above range, crystal growth of the lithium transition metal oxide may sufficiently occur without deviation (uniformly) for each sintering position, and there is an advantageous effect in terms of increasing the productivity.

The lithium borate compound is a compound formed by reaction of residual lithium, such as $Li_2O$, LiOH, and $Li_2CO_3$, with the boron-containing raw material, wherein the lithium borate compound, for example, may be at least one of $Li_3BO_3$, $Li_2B_4O_7$, $LiBO_2$, $Li_6B_4O_9$, $Li_2B_8O_{13}$, $Li_3B_7O_{12}$, $LiB_3O_5$, or $Li_4B_2O_5$. The lithium borate compound may be easily dissolved in a washing solution, particularly, a washing solution containing a solvent such as deionized water and distilled water. Accordingly, the lithium borate compound may be easily removed through a washing process in the second step below.

With respect to the lithium transition metal oxide prepared through the first step of the present invention, since the residual lithium, which may exist on the surface, almost completely reacts with the boron-containing raw material, the residual lithium may not remain on the surface.

The cake including the lithium transition metal oxide having the lithium borate compound formed on the surface thereof which is prepared through the first step, that is, the cake immediately after sintering may have low cake strength, which is measured with a device having a type A (s-5) tip attached to ZTA-2500N by IMADA Co., Ltd., at 600 N or less.

In addition, the cake may have a value according to the following Equation 1 of 0.7 or less, preferably 0.65 or less, and more preferably 0.55 or less. That is, a change in the cake strength over time may be small.

[Equation 1]

$$\text{(cake strength after being left standing for 1 week at 25°C and a relative humidity of 20% - cake strength immediately after sintering) / (cake strength immediately after sintering)}$$

The cake strength after being left standing for 1 week at 25°C and a relative humidity of 20% is a value measured with the device having a type A (s-5) tip attached to ZTA-2500N by IMADA Co., Ltd., after the cake immediately after sintering is left standing for 1 week at 25°C and a relative humidity of 20%.

**Second Step**

The second step is a step of preparing a lithium transition metal oxide having the lithium borate compound removed therefrom by grinding the cake and washing the ground cake.

The grinding is a process of making the cake including the lithium transition metal oxide agglomerated by the sintering of the first step into powder having a size suitable for use as a positive electrode active material. As described above, since the residual lithium, such as $Li_2O$, $LiOH$, and $Li_2CO_3$, is hardly present in the cake including the lithium transition metal oxide having the lithium borate compound formed on the surface thereof which is prepared through the first step, the strength of the cake is low, grinding conditions may be mild. Specifically, the grinding of the cake may be performed at 10,000 rpm or less, for example, 8,000 rpm or less using a grinder. The grinder may be ZM-200 by Retsch GmbH.

The washing is a process of removing the lithium borate compound, which is an impurity present on the surface of the lithium transition metal oxide, with a washing solution. Since the lithium borate compound may be easily removed through the washing, performance of a secondary battery may be improved when the positive electrode active material prepared by the method according to the present invention is used in the battery.

The solvent of the washing solution may be at least one of deionized water, distilled water, ethanol, an acidic aqueous solution, or a basic aqueous solution. The acidic aqueous solution may be a solution in which at least one of phosphoric acid, acetic acid, oxalic acid, or boric acid is dissolved in distilled water. The basic aqueous solution may be a solution in which at least one of lithium hydroxide or lithium carbonate is dissolved in distilled water. The solvent of the washing solution may be preferably deionized water and/or distilled water. In this case, the lithium borate compound may be easily dissolved in the washing solution.

The washing of the second step may be performed by adding the washing solution in an amount of 50 parts by weight to 200 parts by weight, preferably 80 parts by weight to 200 parts by weight, and more preferably 80 parts by weight to 150 parts by weight based on 100 parts by weight of the cake. In a case in which the amount of the washing solution is within the above range, the lithium borate compound, as an impurity, may be sufficiently washed, and the productivity may be improved.

The washing of the second step may be performed in a temperature range of 5°C to 40°C, for example, 20°C to 30°C. In addition, the washing of the second step may be performed for 3 minutes to 30 minutes, preferably 3 minutes to 20 minutes, and more preferably 3 minutes to 10 minutes. In a case in which the temperature and time of the washing process are within the above ranges, the lithium borate compound present on the surface of the lithium transition metal oxide may be easily removed. Accordingly, a gelation phenomenon may not occur during preparation of a positive electrode slurry, and no gas may be generated when used in the battery. In addition, since lithium present in the oxide does not escape during the washing, the performance of the battery may not be degraded.

After the second step is performed, the amount of the lithium borate compound may be 100 ppm or less, preferably 50 ppm or less, and more preferably 30 ppm or less based on the positive electrode active material. That is, through the second step, almost all of the lithium borate compound may be removed from the lithium transition metal oxide having the lithium borate compound formed thereon. Accordingly, the performance of the secondary battery may be improved when the positive electrode active material prepared by the method according to the present invention is used in the battery.

**Third Step**

The method of preparing a positive electrode active material according to the present invention may further include a step of drying the lithium transition metal oxide having the lithium borate compound removed therefrom.

The drying process is a process for removing moisture from the positive electrode active material containing moisture through the washing process, wherein, after the moisture is removed by using a vacuum pump, drying may be performed in a temperature range of 30°C to 200°C, for example, 100°C to 150°C for 12 hours or more.

**Fourth Step**

The method of preparing a positive electrode active material according to the present invention may further include a step of forming a coating layer by mixing the dried lithium transition metal oxide with a coating element-containing raw material and performing a heat treatment. Accordingly, a positive electrode active material, in which the coating layer is formed on the surface of the lithium transition metal oxide, may be prepared.

A metallic element included in the coating element-containing raw material may be Zr, B, W, Mo, Cr, Nb, Mg, hafnium (Hf), Ta, lanthanum (La), Ti, strontium (Sr), barium (Ba), cerium (Ce), fluorine (F), phosphorus (P), sulfur (S), or Y. The coating element-containing raw material may be an acetic acid salt, nitrate, sulfate, halide, sulfide, hydroxide, oxide, or oxyhydroxide containing the metallic element. For example, in a case in which the metallic element is B, boric acid $(B(OH)_3)$ may be used.

The coating element-containing raw material may be included in a weight of 200 ppm to 2,000 ppm based on the dried lithium transition metal oxide. In a case in which the weight of the coating element-containing raw material is within the above range, capacity of the battery may be improved, and, since the coating layer formed may suppress a direct reaction between an electrolyte solution and the lithium transition metal oxide, long-term performance characteristics of the battery may be improved.

The heat treatment may be performed in a temperature range of 200°C to 400°C. In a case in which the heat treatment temperature is within the above range, a coating layer may be formed while maintaining structural stability of the lithium transition metal oxide.

The heat treatment may be performed for 1 hour to 10 hours. In a case in which the heat treatment time is within the above range, a suitable coating layer may be formed and production efficiency may be improved.

**Positive Electrode**

Also, the present invention may provide a positive electrode for a lithium secondary battery which includes the positive electrode active material prepared by the above-described method.

The positive electrode active material may have a composition represented by the following Formula 3.

$$[\text{Formula 3}] \qquad Li_x[Ni_aCo_bM^{1}{}_cM^{2}{}_d]O_2$$

In Formula 3,

$M^1$ is at least one of Mn or Al,
$M^2$ is at least one of B, Mg, Ca, Ti, V, Cr, Fe, Zn, Ga, Y, Zr, Nb, Mo, Ta, or W, and
$0.9 \leq x \leq 1.2$, $0.6 \leq a < 1$, $0 < b \leq 0.4$, $0 < c \leq 0.4$, $0 \leq d \leq 0.1$, and $a+b+c+d=1$.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

The positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

## Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Examples and Comparative Example

A positive electrode active material precursor having a composition represented by $Ni_{0.88}Co_{0.05}Mn_{0.07}(OH)_2$ was prepared.

$LiOH \cdot H_2O$, as a lithium-containing raw material, was prepared in an amount such that a molar ratio of the positive electrode active material precursor to the $LiOH \cdot H_2O$ was 1:1.05.

## Example 1

As a boron-containing raw material, $B(OH)_3$ was prepared in an amount such that a concentration of the $B(OH)_3$ was 1,000 ppm based on the positive electrode active material precursor.

The positive electrode active material precursor, the $LiOH \cdot H_2O$, and the $B(OH)_3$ were mixed and then sintered at 780°C for 13 hours in an oxygen atmosphere having an oxygen concentration of 90 vol% to prepare a lithium transition metal oxide cake with a composition of $LiNi_{0.88}Co_{0.05}Mn_{0.07}O_2$ having a lithium borate compound formed on a surface thereof. The lithium borate compound was $LiBO_2$, $Li_3BO_3$, and $Li_2B_4O_7$.

After a ground material, in which the cake was ground at 8,000 rpm using a grinder (ZM-200, Retsch GmbH), and deionized water were mixed in a weight ratio of 1:1 and washed at 25°C for 5 minutes to remove the lithium borate compound, filtering was performed for 3 minutes using a vacuum pump and drying was performed in a vacuum oven at 130°C for 12 hours or more to prepare a lithium transition metal oxide having a composition of $LiNi_{0.88}Co_{0.05}Mn_{0.07}O_2$.

The lithium transition metal oxide and $B(OH)_3$ (amount such that a concentration of the $B(OH)_3$ was 1,000 ppm based on the lithium transition metal oxide), as a coating element-containing raw material, were mixed and then heat-treated at 300°C for 5 hours in an oxygen atmosphere to prepare a positive electrode active material in which a boron-containing coating layer was formed on a surface of the lithium transition metal oxide.

**Example 2**

A positive electrode active material was prepared in the same manner as in Example 1 except that, as a boron-containing raw material, $B(OH)_3$ was prepared in an amount such that a concentration of the $B(OH)_3$ was 5,000 ppm based on the positive electrode active material precursor and used.

**Example 3**

A positive electrode active material was prepared in the same manner as in Example 1 except that, as a boron-containing raw material, $B(OH)_3$ was prepared in an amount such that a concentration of the $B(OH)_3$ was 20,000 ppm based on the positive electrode active material precursor and used.

**Comparative Example 1**

The positive electrode active material precursor and $LiOH \cdot H_2O$ were mixed and then sintered at 780°C for 13 hours in an oxygen atmosphere having an oxygen concentration of 90 vol% to prepare a lithium transition metal oxide cake with a composition of $LiNi_{0.88}Co_{0.05}Mn_{0.07}O_2$. Residual lithium, such as the unreacted $LiOH \cdot H_2O$ and lithium by-products, was present in the lithium transition metal oxide cake.
After a ground material, in which the cake was ground at 8,000 rpm using a grinder (ZM-200, Retsch GmbH), and deionized water were mixed in a weight ratio of 1:1 and washed at 25°C for 5 minutes to remove the residual lithium, filtering was performed for 3 minutes using a vacuum pump and drying was performed in a vacuum oven at 130°C for 12 hours or more to prepare a lithium transition metal oxide having a composition of $LiNi_{0.88}Co_{0.05}Mn_{0.07}O_2$.
The lithium transition metal oxide and $B(OH)_3$ (amount such that a concentration of the $B(OH)_3$ was 1,000 ppm based on the lithium transition metal oxide), as a coating element-containing raw material, were mixed and then heat-treated at 300°C for 5 hours in an oxygen atmosphere to prepare a positive electrode active material in which a boron-containing coating layer was formed on a surface of the lithium transition metal oxide.

**Experimental Examples**

**Experimental Example 1: Strength Evaluation of Lithium Transition Metal Oxide Cake**

Cake strength immediately after the preparation, cake strength after being left standing for 1 day at 25°C and a relative humidity of 20%, and cake strength after being left standing for 1 week at 25°C and a relative humidity of 20% were measured for each of the lithium transition metal oxide cakes of Examples 1 to 3 and Comparative Example 1.
Also, strength after being left standing for 1 week at 25°C and a relative humidity of 20% was measured for each of the ground materials of Examples 1 to 3 and Comparative Example 1.
The cake strength was measured three times for each sample with a device having a type A (s-5) tip attached to ZTA-2500N by IMADA Co., Ltd., and average values are presented in Table 1.

[Table 1]

|  | Cake strength (N) | | | Strength after grinding and being left standing for 1 week (N) |
|---|---|---|---|---|
|  | Immediately after the preparation | After being left standing for 1 day | After being left standing for 1 week |  |
| Example 1 | 510 | 620 | 840 | 320 |
| Example 2 | 350 | 420 | 530 | 250 |
| Example 3 | 240 | 300 | 350 | 100 |
| Comparative Example 1 | 800 | 970 | 1430 | 720 |

Referring to Table 1, it may be confirmed that the lithium transition metal oxide cakes of Examples 1 to 3, in which residual lithium that may remain on the surface is minimized by forming the lithium borate compound on the surface thereof through additionally mixing the boron-containing raw material capable of reacting with the residual lithium and then sintering the mixture during the preparation of the lithium transition metal oxide, had low strength and also had a small amount of the strength increased over time.

In contrast, it may be confirmed that the lithium transition metal oxide cake of Comparative Example 1 had high cake strength due to the presence of residual lithium and also had a large amount of the cake strength increased over time.

**Experimental Example 2: Half-cell Characteristic Evaluation**

Lithium secondary batteries were prepared by using the positive electrode active materials prepared in Examples 1 to 3 and Comparative Example 1, and initial charge capacity and capacity retention were evaluated for each of the lithium secondary batteries.

Specifically, each of the positive electrode active materials prepared in Examples 1 to 3 and Comparative Example 1, a carbon black conductive agent, and a PVdF binder were mixed in an NMP solvent at a weight ratio of 97.5:1.0:1.5 to prepare a positive electrode slurry. One surface of an aluminum current collector was coated with the positive electrode slurry, dried at 130°C, and then rolled to prepare a positive electrode. A lithium (Li) metal disk was used as a negative electrode. After an electrode assembly was prepared by disposing a separator between the positive electrode and negative electrode prepared as described above, a lithium secondary battery was prepared by disposing the electrode assembly in a battery case and then injecting an electrolyte solution into the case. In this case, as the electrolyte solution, an electrolyte solution, in which 1 M $LiPF_6$ was dissolved in an organic solvent of EC/EMC/DEC (3/3/4, vol%), was injected to prepare the lithium secondary battery.

Each lithium secondary battery prepared as described above was charged at a constant current of 0.1 C to 4.25 V at 25°C and then was discharged at a constant current of 0.1 C until the voltage reached 3.0 V. Initial charge capacity values are presented in Table 3.

Also, the charge and discharge cycle was repeated 30 times at a constant current of 0.33 C in a range of 3.0 V to 4.25 V at 45°C to measure capacity of the lithium secondary battery, and, particularly, a ratio of 30th cycle capacity to 1st cycle capacity was set as a capacity retention and the capacity retention is presented in Table 2 below.

[Table 2]

|  | Initial charge capacity (mAh/g) | Capacity retention (%) |
|---|---|---|
| Example 1 | 228.4 | 97.9 |
| Example 2 | 228.7 | 97.8 |
| Example 3 | 230.3 | 97.8 |
| Comparative Example 1 | 230.3 | 95.7 |

Referring to Table 2, with respect to the secondary batteries including the positive electrode active materials prepared in Examples 1 to 3, it may be confirmed that initial charge capacities were at an equivalent level to and capacity retentions were better than that of the secondary battery including the positive electrode active material prepared in Comparative Example 1. The reason for this is that grinding was easy due to the low strength of the lithium transition metal oxide cakes of Examples 1 to 3 as described above and cracking of the lithium transition metal oxide, which may occur when the strength of the cake was high during the grinding process, did not occur.

Thus, in the present invention, it may be understood that strength of a cake and a change in the strength over time may be reduced by preparing the cake including a lithium transition metal oxide having a lithium borate compound formed on a surface thereof through additionally mixing a boron-containing raw material capable of reacting with residual lithium together with a positive electrode active material precursor and a lithium-containing raw material and then sintering the mixture during the preparation of the lithium transition metal oxide. Also, accordingly, since the grinding process may be easily performed, it may be understood that productivity may not only be improved, but a positive electrode active material having excellent quality may also be provided. In addition, it may be confirmed that an effect of improving performance of a secondary battery may be obtained when the positive electrode active material prepared by the method according to the present invention is used in the battery.

**Claims**

1. A method of preparing a positive electrode active material, the method comprising:

a first step of preparing a cake including a lithium transition metal oxide having a lithium borate compound formed on a surface thereof by mixing a positive electrode active material precursor having a composition represented by Formula 1 or Formula 2, a lithium-containing raw material, and a boron-containing raw material and sintering the mixture; and

a second step of grinding the cake and washing the ground cake to prepare a lithium transition metal oxide having the lithium borate compound removed therefrom:

[Formula 1]     $[Ni_aCo_bM^1_cM^2_d](OH)_2$

[Formula 2]     $[Ni_aCo_bM^1_cM^2_d]O \cdot OH$

wherein, in Formula 1 and Formula 2,

$M^1$ is at least one of manganese (Mn) or aluminum (Al),

$M^2$ is at least one of boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), or tungsten (W), and

$0.6 \leq a < 1$, $0 < b \leq 0.4$, $0 < c \leq 0.4$, $0 \leq d \leq 0.1$, and $a+b+c+d=1$.

2.  The method of claim 1, wherein the boron-containing raw material is at least one of lithium borate, boron oxide, boric acid, an oxoacid of boron, or an oxoacid salt of boron.

3.  The method of claim 1, wherein the boron-containing raw material is mixed in an amount of 0.01 part by weight to 5 parts by weight based on 100 parts by weight of the positive electrode active material precursor.

4.  The method of claim 1, wherein the positive electrode active material precursor and the lithium-containing raw material are mixed in a molar ratio of 1:0.9 to 1:1.2.

5.  The method of claim 1, wherein the sintering of the first step is performed in a temperature range of 600°C to 1,000°C.

6.  The method of claim 1, wherein the sintering of the first step is performed in an oxygen or air atmosphere.

7.  The method of claim 1, wherein the sintering of the first step is performed for 3 hours to 30 hours.

8.  The method of claim 1, wherein the lithium borate compound is at least one of $Li_3BO_3$, $Li_2B_4O_7$, $LiBO_2$, $Li_6B_4O_9$, $Li_2B_8O_{13}$, $Li_3B_7O_{12}$, $LiB_3O_5$, or $Li_4B_2O_5$.

9.  The method of claim 1, wherein the washing of the second step is performed in a temperature range of 5°C to 40°C.

10. The method of claim 1, wherein the washing of the second step is performed for 3 minutes to 30 minutes.

11. The method of claim 1, wherein the washing of the second step is performed by adding a washing solution in an amount of 50 parts by weight to 200 parts by weight based on 100 parts by weight of the cake.

12. The method of claim 11, wherein a solvent of the washing solution is at least one of deionized water, distilled water, ethanol, an acidic aqueous solution, or a basic aqueous solution.

13. The method of claim 1, further comprising a third step of drying the lithium transition metal oxide having the lithium borate compound removed therefrom; and

a fourth step of forming a coating layer by mixing the dried lithium transition metal oxide with a coating element-containing raw material and performing a heat treatment.

14. The method of claim 1, wherein, after the second step is performed, an amount of the lithium borate compound is 100 ppm or less based on the positive electrode active material.

## INTERNATIONAL SEARCH REPORT

| | International application No. |
|---|---|
| | **PCT/KR2021/011173** |

### A. CLASSIFICATION OF SUBJECT MATTER

**C01G 53/00**(2006.01)i; **C01G 53/04**(2006.01)i; **H01M 4/525**(2010.01)i; **H01M 4/505**(2010.01)i; **H01M 4/36**(2006.01)i; **H01M 4/62**(2006.01)i; **H01M 10/052**(2010.01)i

According to International Patent Classification (IPC) or to both national classification and IPC

### B. FIELDS SEARCHED

Minimum documentation searched (classification system followed by classification symbols)

C01G 53/00(2006.01); C01B 32/991(2017.01); H01M 10/052(2010.01); H01M 4/02(2006.01); H01M 4/505(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 붕소(boron), 케이크(cake), 소성(calcination), 수세(wash)

### C. DOCUMENTS CONSIDERED TO BE RELEVANT

| Category* | Citation of document, with indication, where appropriate, of the relevant passages | Relevant to claim No. |
|---|---|---|
| Y | KR 10-2017-0063408 A (LG CHEM, LTD.) 08 June 2017 (2017-06-08)<br>See claim 9; and paragraphs [0048], [0050], [0119]-[0122] and [0198]-[0200]. | 1-14 |
| Y | JP 2004-335278 A (NICHIA CHEM IND., LTD.) 25 November 2004 (2004-11-25)<br>See paragraphs [0030], [0032], [0048] and [0050]. | 1-14 |
| Y | KR 10-2019-0117049 A (LG CHEM, LTD.) 16 October 2019 (2019-10-16)<br>See claim 1. | 13 |
| A | KR 10-2017-0075596 A (POSCO et al.) 03 July 2017 (2017-07-03)<br>See entire document. | 1-14 |
| A | KR 10-2019-0142147 A (LG CHEM, LTD.) 26 December 2019 (2019-12-26)<br>See entire document. | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 December 2021** | **09 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/011173**

| Patent document cited in search report | | | Publication date (day/month/year) | Patent family member(s) | | | Publication date (day/month/year) |
|---|---|---|---|---|---|---|---|
| KR | 10-2017-0063408 | A | 08 June 2017 | CN | 108140829 | A | 08 June 2018 |
| | | | | CN | 108140829 | B | 18 June 2021 |
| | | | | EP | 3386015 | A1 | 10 October 2018 |
| | | | | JP | 2018-532236 | A | 01 November 2018 |
| | | | | KR | 10-1989399 | B1 | 17 June 2019 |
| | | | | US | 1081694 | B2 | 03 August 2021 |
| | | | | US | 2018-0261842 | A1 | 13 September 2018 |
| | | | | US | 2021-0313573 | A1 | 07 October 2021 |
| | | | | WO | 2017-095153 | A1 | 08 June 2017 |
| JP | 2004-335278 | A | 25 November 2004 | JP | 3885764 | B2 | 28 February 2007 |
| KR | 10-2019-0117049 | A | 16 October 2019 | KR | 10-2204938 | B1 | 19 January 2021 |
| KR | 10-2017-0075596 | A | 03 July 2017 | | None | | |
| KR | 10-2019-0142147 | A | 26 December 2019 | KR | 10-2279001 | B1 | 20 July 2021 |

Form PCT/ISA/210 (patent family annex) (July 2019)

**EP 4 166 507 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200105291